Europäisches Patentamt

European Patent Office

Office européen des brevets

(19)

(11) Publication number: **0 203 690**
**B1**

# EUROPEAN PATENT SPECIFICATION

(12)

(45) Date of publication of the patent specification:
04.07.90

(51) Int. Cl.⁵: **G01V 5/10**

(21) Application number: 86302702.5

(22) Date of filing: **11.04.86**

(54) **Method and tool for neutron lifetime logging.**

(30) Priority: **24.04.85 US 726739**

(43) Date of publication of application:
**03.12.86 Bulletin 86/49**

(45) Publication of the grant of the patent:
**04.07.90 Bulletin 90/27**

(84) Designated Contracting States:
**DE FR GB NL**

(56) References cited:
**US-A- 2 769 918**
**US-A- 2 879 402**
**US-A- 3 032 658**

(73) Proprietor: **MOBIL OIL CORPORATION, 150 East 42nd Street, New York New York 10017(US)**

(72) Inventor: **Allen, Linus Scott, 10260 Newcombe, Dallas Texas 75228(US)**
Inventor: **Mills, William Raymond, 919 Clint Smith Drive, Duncanville Texas 75137(US)**
Inventor: **Stromswold, David Charles, 4015 Bobbin Lane, Addison Texas 75234(US)**

(74) Representative: **Colgan, Stephen James et al, CARPMAELS & RANSFORD 43 Bloomsbury Square, London WC1A 2RA(GB)**

ACTORUM AG

## Description

This invention relates to a radioactive well logging method and tool for irradiating subterranean formations under investigation with bursts of fast neutrons and, more particularly, to an improved method and tool for characterizing the formation on the basis of the lifetime of a subsequently produced neutron population.

Various techniques may be employed in order to characterize subterranean formations with regard to their fluid or mineral content, lithologic characteristics, porosity, or to provide for stratigraphic correlation. The neutron source may be a steady-state source or a pulsed source. For example, neutron porosity logging may be carried out using a steady-state neutron source in order to bombard the formation with fast neutrons. The porosity of the formation then may be determined by measuring thermal neutrons employing two detectors at different spacings from the source or by measuring epithermal neutrons with a single detector.

In pulsed neutron logging procedures, the formations are irradiated with repetitive bursts of fast neutrons, normally neutrons exhibiting an energy greater than 1 Mev. When the fast neutrons enter the formation, they are moderated to lower energy levels by the nuclear collision processes of elastic and inelastic scattering. In elastic scattering the neutron loses a portion of its energy in a collision that is perfectly elastic, i.e., the energy lost by the neutron is acquired as kinetic energy by the nucleus with which it collides. In inelastic scattering only some of the energy lost by the neutrons is acquired as kinetic energy by the nucleus with which it collides. The remaining energy loss generally takes the form of a gamma ray emitted from the collision nucleus.

In the course of moderation, the neutrons reach the epithermal range and thence are further moderated until they reach the thermal neutron range. Thermal neutrons are neutrons which are in thermal equilibrium with their environment. The distribution in speed of thermal neutrons follows the so-called Maxwellian distribution law. The energy corresponding to the most probable speed for a temperature of 20°C is 0.025 electron volt. Epithermal neutrons are those neutrons which exhibit energies within the range from immediately above the thermal neutron region to about 100 electron volts. While the boundary between thermal and epithermal neutrons is, of necessity, somewhat arbitrary, it is normally placed in the range of 0.1-10.0 electron volts.

The populations of neutrons at the various energy levels decay with time following primary irradiation and thus offer means of characterising the formation. For example, in the case of elastic scattering, which predominates for energies between a few electron volts and about 1 Mev, the number of collisions required for a neutron to moderate from one energy level to a second lower energy level varies more or less directly with the atomic weight of the nuclei available for collision. In subterranean formations, hydrogen nuclei present in hydrogenous materials such as oil, water, and gas tend to predominate in the slowing down process. Thus, the die-away rate of the epithermal neutron population gives a qualitative indication of the amount of hydrogenous material present which in turn may be indicative of the porosity of the formation.

For example, U.S. Patent 4 097 737 describes a method and system for epithermal neutron lifetime logging utilizing a 14 Mev pulsed neutron source and a neutron detector that is sensitive to epithermal neutrons and highly discriminatory against thermal neutrons. The detector is relatively insensitive to the high energy neutrons and has a filter that renders it sharply insensitive to thermal neutrons.

In accordance with the present invention, there is provided a method for neutron lifetime logging of subterranean formations surrounding a borehole, comprising the steps of:

(a) irradiating formations surrounding a borehole with bursts of fast neutrons,
(b) measuring the neutron lifetime of secondary radiation produced by the injected radiation by the use of an articulated pad containing a radiation detector assembly, the pad being pressed against the borehole wall so as to exclude borehole fluid from between the pad and the borehole wall at the point of contact, characterised in that the length of the pad is no greater than 300 mm.

In accordance with the invention there is also provided a borehole logging tool for the neutron lifetime logging of subterranean formations surrounding a borehole comprising:

(a) a pulsed source of fast neutrons for irradiating the formations surrounding a borehole with fast neutrons,
(b) an articulated pad containing at least one directionally sensitive radiation detector assembly for measuring the die-away rate of secondary radiation produced by the injected neutrons which returns to the borehole from the irradiated formations, and
(c) means for positioning the directionally sensitive radiation detector assembly so that it maintains contact with the formation so as to exclude borehole fluid from between the detector assembly and the borehole wall as the logging tool traverses the borehole, characterised in that the length of the pad is no greater than 300 mm.

A borehole logging tool in accordance with the precharacterising clause of the preceding paragraph is described in US-A-2 879 402.

Such radiation measurement is carried out by positioning a directionally sensitive radiation detector assembly so that it is in physical contact with the borehole wall and azimuthally orienting such directional sensitivity toward the formation at the point of contact. The radiation detector assembly is firmly pressed against the formation so as to exclude borehole fluid from the region between the detector assembly and the borehole wall.

In the accompanying drawings:

FIG. 1 illustrates a borehole logging tool for use in the neutron lifetime logging method of the present invention.

FIG. 2 is a cross-sectional view of the radiation detector assembly or pad of the borehole logging tool of FIG. 1 as it is pressed against a subterranean formation in an enlarged portion of a borehole in accordance with the invention.

In thermal neutron lifetime logging for the determination of hydrocarbon saturation and in epithermal neutron lifetime logging for the determination of rock porosity, a measurement of the die-away rate of secondary radiation produced by the injected neutrons is influenced both by the properties of the formation and the properties of the borehole. The formation properties can be enhanced in this measurement by delaying the analysis period relative to the neutron burst so as to allow the faster decaying radiation from the borehole fluid to dissipate before measuring the slower-decaying radiation signal from the formation. However, delaying the analysis period does not always solve the problem because the delayed formation signal may be too weak to yield statistically good data.

An alternative to the use of a long delay period is to attempt to eliminate the borehole fluid effect by focusing the radiation detector strongly on the formation by pressing the radiation detector firmly against the borehole wall and shielding the sensitive detector from radiation emanating from the borehole fluid. Thus, by excluding borehole fluid from the region between the detector and the borehole wall, and by suppressing radiation from the borehole fluid, analysis of the decaying neutron population can be initiated sooner and will benefit from the use of radiation measurements of higher statistical quality.

Particularly troublesome, however, to such an alternative formation radiation measurement is the presence of rugosity in the borehole wall. Any enlargement of depth greater than about one-eighth inch can seriously affect the formation radiation measurement. Most conventional borehole logging systems employ radiation detectors that move only along the borehole wall and cannot track rugose boreholes with enlargements less than the length of the logging tool, thereby allowing the borehole fluid occupying the enlargement to adversely affect the formation radiation measurement. This adverse effect occurs because the borehole fluid die-away component is so dominant that sensitivity of the radiation detector to the formation die-away component may be quite difficult to observe.

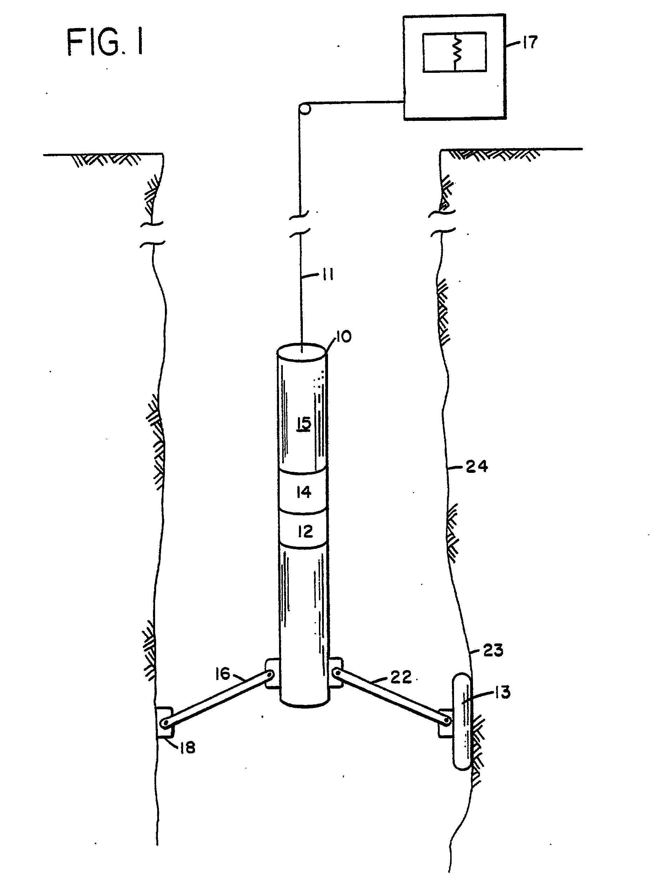

Referring now to FIG. 1, there is shown the borehole logging system of the present invention. A borehole tool 10, supported by cable 11, comprises a high energy pulsed neutron source 12 and an articulated radiation detector pad 13. A high-voltage power supply 14 is provided for the source 12 and a module 15 is provided with circuits for utilization and modification of signals from radiation detector pad 13. Also included are circuits for the control of the high voltage power supply 14. A backup arm 16 with attached pad 18 extending from the logging tool 10 may be included to force the logging tool 10 to follow the average contour of the borehole wall 24. Cable 11 extends to a surface unit 17 where the signals from the radiation detector pad 13 are recorded along with an indication of depth.

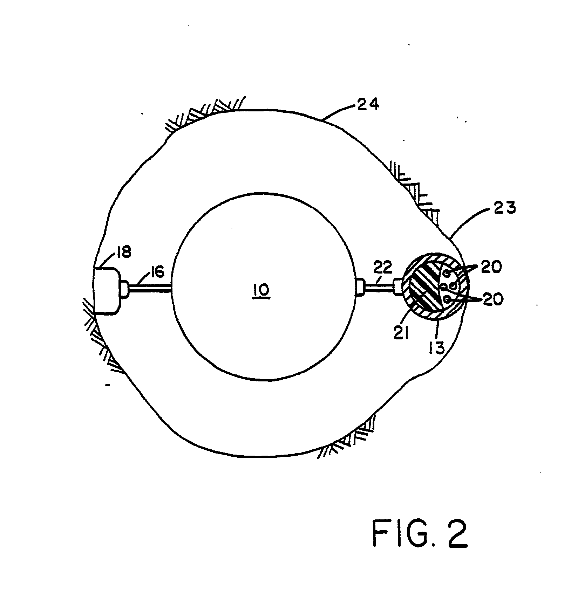

To accomplish the specific feature of the present invention of eliminating the troublesome borehole rugosity effects on the formation radiation measurement, the radiation detector is housed in a pad small enough to track short borehole enlargements. Most such enlargements can be tracked by a radiation detector pad that is no greater than 300 mm (1 foot) in length and is preferably on the order of 150 to 200 mm (six to eight inches) in length. A cross-sectional view of such a pad is shown in FIG. 2. The radiation detector pad 13 may, for example, comprise a plurality of radiation counters 20, which are positioned against one side of pad 13, and a shielding material (i.e., a moderating and/or absorbing material) 21 which fills the remaining portion of the pad. The arm 22, shown in FIG. 1, moves the pad 13 into the enlarged portion 23 of the borehole 24, and also azimuthally orients the pad so that the side of the pad against which the radiation counters 20 are positioned is firmly pressed against the formation in such enlarged portion of the borehole. In this manner, the focusing of the directional sensitivity of the assembly consisting of the radiation counters 20 and the shielding material 21 on the formation is maximized, while the directional sensitivity of such assembly to radiation from the borehole fluid is minimized by the moderation and/or absorption of such borehole fluid radiation by the shielding material 21. It is both the separation of the radiation detector pad 13 from the remaining portion of the logging tool by means of the articulating arm 22 and the small size of such pad that permits borehole fluid to be excluded from the region between the pad and the formation at the point of contact between the pad and the formation.

Any number of epithermal neutron, thermal neutron or gamma ray detectors may be employed as the radiation detector of the present invention. For epithermal neutron lifetime logging, gadolinium or cadmium filtered helium-3 counters shielded by boron-loaded polyethylene may be employed. For thermal neutron lifetime logging, bare helium-3 counters shielded by lithium, boron or cadmium may be employed. If neutron-capture gamma rays are to be measured in preference to epithermal or thermal neutrons, a bismuth-germanate, cesium-iodide or sodium-iodide crystal shielded by an element of high atomic number, such as lead or tungsten, may be employed.

This invention permits neutron lifetime logging of subterranean formations penetrated by rugose boreholes which is not possible with prior art borehole logging systems. Other filtering, moderating and absorbing materials than those described above may be successfully utilized as well as an infinite variety of combinations of such materials. It is to be understood that the invention relates to a neutron lifetime logging method and that maximizes sensitivity to formation neutron die-away measurements in rugose boreholes while minimizing sensitivity to radiation from the borehole fluid.

## Claims

1. A method for neutron lifetime logging of subterranean formations surrounding a borehole, comprising the steps of:
   (a) irradiating formations surrounding a borehole with bursts of fast neutrons,
   (b) measuring the neutron lifetime of secondary radiation produced by the injected radiation by the use of an articulated pad (13) containing a radiation detector assembly (20), the pad being pressed against the borehole wall so as to exclude borehole fluid from between the pad and the borehole wall at the point of contact, characterised in that the length of the pad is no greater than 300 mm.

2. A borehole logging tool for the neutron lifetime logging of subterranean formations surrounding a borehole comprising:
   (a) a pulsed source of fast neutrons (12) for irradiating the formations surrounding a borehole with fast neutrons,
   (b) an articulated pad (13) containing at least one directionally sensitive radiation detector assembly (20) for measuring the die-away rate of secondary radiation produced by the injected neutrons which returns to the borehole from the irradiated formations, and
   (c) means (22) for positioning the directionally sensitive radiation detector assembly so that it maintains contact with the formation so as to exclude borehole fluid from between the detector assembly and the borehole wall as the logging tool traverses the borehole, characterised in that the length of the pad is no greater than 300 mm.

3. A borehole logging tool according to claim 2 wherein the length of the pad (13) is 150 to 200 mm.

## Patentansprüche

1. Verfahren zur Untersuchung unterirdischer ein Bohrloch umgebender Formationen mit Hilfe der Zerfallzeit von Neutronen, aufweisend die Stufen:
   (a) Bestrahlen der das Bohrloch umgebenden Formationen mit Strahlenstößen schneller Neutronen,
   (b) Messen der Neutronen-Zerfallzeit der sekundären durch die eingeführte Strahlung erzeugten Strahlung durch die Verwendung eines gelenkig gehalterten Kissens (13), welches einen Strahlungsdetektor (20) enthält und so gegen die Bohrlochwandung gedrückt wird, um Bohrlochflüssigkeit daran zu hindern, zwischen dem Kissen und der Bohrlochwandung am Berührungspunkt hindurchzuströmen, dadurch gekennzeichnet, daß die Länge des Kissens nicht größer als 300 mm ist.

2. Vorrichtung zur Untersuchung unterirdischer ein Bohrloch umgebender Formationen mit Hilfe der Zerfallzeit von Neutronen, aufweisend
   (a) eine pulsierende Quelle schneller Neutronen (12) zur Bestrahlung der das Bohrloch umgebenden Formationen mit schnellen Neutronen,
   (b) ein gelenkig geführtes Kissen (13), welches wenigstens einen richtungsabhängig ansprechenden Strahlungsdetektor (20) zur Messung der Zerfallsrate der sekundären Strahlung aufweist, die durch die injizierten Neutronen erzeugt wird, welche in das Bohrloch von den bestrahlten Formationen her zurückkehren, und
   (c) eine Einrichtung (22) zur Positionierung des richtungsabhängig ansprechenden Strahlungsdetektors, so daß er mit der Formation in Berührung verbleibt, um Bohrlochflüssigkeit daran zu hindern, zwischen dem Detektor und der Bohrlochwandung hindurchzuströmen, wenn die Untersuchungsvorrichtung das Bohrloch durchführt, dadurch gekennzeichnet, daß die Länge des Kissens nicht größer als 300 mm ist.

3. Vorrichtung nach Anspruch 2, dadurch gekennzeichnet, daß die Länge des Kissens (13) zwischen 150 und 200 mm liegt.

## Revendications

1. Un procédé de diagraphie utilisant la durée de vie des neutrons pour la diagraphie de formations souterraines entourant un trou de sondage, comprenant les étapes suivantes:
   (a) l'irradiation des formations entourant un trou de sondage avec des jets de neutrons rapides,
   (b) la mesure de la durée de vie des neutrons d'une radiation secondaire produite par la radiation injectée, au moyen d'un patin articulé (13) contenant un ensemble détecteur (20) de radiations, le patin étant pressé contre la paroi du trou de sondage de façon à exclure toute présence de fluide du trou de sondage entre le patin et la paroi du trou de sondage au point de contact, caractérisé en ce que la longueur du patin ne dépasse pas 300 mm.

2. Un outil pour la diagraphie d'un trou de sondage utilisant la durée de vie des neutrons, pour la diagraphie des formations souterraines entourant un trou de sondage, comprenant:
   (a) une source pulsée (12) de neutrons rapides pour irradier les formations entourant un trou de sondage avec des neutrons rapides,
   (b) un patin articulé (13) contenant au moins un ensemble détecteur (20) de radiations à sensibilité directionnelle pour mesurer la vitesse de décroissance d'une radiation secondaire produite pour les neutrons injectés qui reviennent vers le trou de sondage en provenance des formation irradiées, et
   (c) des moyens (22) pour mettre en place l'ensemble détecteur de radiations à sensibilité directionnelle de telle sorte qu'il maintienne le contact avec la formation de façon à exclure toute présence de fluide du trou de sondage entre le patin et la paroi du trou de sondage quand l'outil pour la diagraphie passe à travers la formation, outil caractérisé en ce que la longueur du patin ne dépasse pas 300 mm.

3. Un outil de diagraphie de trou de sondage selon la revendication 2, caractérisé en ce que la longueur du patin (13) est de 150 à 200 mm.

FIG. 1

FIG. 2